# EUROPÄISCHE PATENTSCHRIFT

(11) **EP 1 975 045 B1**
(45) Veröffentlichungstag und Bekanntmachung des Hinweises auf die Patenterteilung: **01.12.2010**
(21) Anmeldenummer: 07105032.2
(22) Anmeldetag: 27.03.2007
(51) Int. Cl.: B62D 53/02

(54) **Geländegängiges Fahrzeug mit einer Verdrehdämpfung**
All-terrain vehicle with skew suppression
Véhicule tout terrain doté d'un amortisseur rotatif

(43) Veröffentlichungstag der Anmeldung: 01.10.2008
(73) Patentinhaber: Aebi & Co. AG, 3400 Burgdorf (CH)
(72) Erfinder: Moos, Niklaus, 3422 Kirchberg (CH); Wüthrich, Heinz, 3048 Worblaufen (CH)
(74) Vertreter: Muri, Peter

(56) Entgegenhaltungen:
- WO-A-00/46057
- WO-A-99/59862
- AT-B- 335 289
- DE-A1- 10 116 777
- GB-A- 368 744
- US-A- 2 105 553
- US-A- 2 785 908
- US-A- 2 792 234
- US-A- 3 189 117
- US-A- 3 292 943
- US-A- 3 669 469

## Beschreibung

Die vorliegende Erfindung bezieht sich auf ein geländegängiges Fahrzeug gemäss dem Oberbegriff von Anspruch 1 oder 2.

### Definitionen

### Geländegängiges Fahrzeug

Geländegängige Fahrzeuge werden insbesondere in der Landwirtschaft zur Bewirtschaftung von steilem, unebenem und gebirgigem Gelände benötigt. Es ist erforderlich, dass sich Vorderachse und Hinterachse des geländegängigen Fahrzeuges unabhängig voneinander bewegen. Ferner ist es von Vorteil, wenn die jeweiligen Achsen, dass heisst die Vorderachse und die Hinterachse, zusätzliche separate Freiheitsgrade aufweisen. So genannte Allradfahrzeuge bieten diese Eigenschaft. Insbesondere für die Benutzung im extremen Gelände ist es notwendig, dass jedes Rad einzeln antreibbar ist. Die Verdrehung zwischen der Vorderachse und der Hinterachse geschieht in der Regel derart, dass beide Bereiche, nämlich das Vorderteil des geländegängigen Fahrzeuges und das Hinterteil des geländegängigen Fahrzeuges miteinander gekoppelt sind und eben diese einen Freiheitsgrad (rotatorischer Freiheitsgrad) aufweisen. Hierzu sind entsprechende Gelenkeinrichtungen vorgesehen, die die Drehbeweglichkeit von Vorderteil gegenüber Hinterteil herbeiführen. Solche geländegängigen Fahrzeuge können beispielsweise Transporter für den landwirtschaftlichen Bereich sein. Sie zeichnen sich durch im Durchmesser kleine Räder sowie eine kompakte Dimensionierung aus.

### Trägerrohr

Eine bestimmte Ausführungsform von geländegängigen Fahrzeugen, insbesondere von Nutzfahrzeugen oder Transportern, ist derart ausgestaltet, dass das Fahrgestell (Chassis) in zwei wesentliche Bereiche unterteilt ist. Das Fahrgestell weist ein Vorderteil und ein Hinterteil auf. Vorder- und Hinterteil umfassen ein Trägerrohr, wobei sich dieses von dem Vorderteil zum Hinterteil des Fahrzeuges erstreckt. Das Trägerrohr selbst ist ein starres Element, das mittig angeordnet und derart dimensioniert ist, dass es die entsprechenden Lasten aufnehmen kann. Vorzugsweise ist es rohrartig ausgebildet. Es kann auch andere Querschnittsformen annehmen. Auch eine Rippenkonstruktion ist denkbar.

Wie bereits beschrieben, ist es ein besonderes Kennzeichen von geländegängigen Fahrzeugen, dass das Vorderteil gegenüber dem Hinterteil verdrehbar ist. Bei Kraftfahrzeugen, die das entsprechende Trägerrohr verwenden, ist die Verdrehung derart gelöst, dass zwischen der Fahrerkabine und der Ladefläche des Nutzfahrzeuges innerhalb des Trägerrohres ein Drehgelenk vorhanden ist, sodass das Trägerrohr an sich in einen vorderen und einen hinteren Abschnitt unterteilbar ist. An den freien Enden des jeweiligen Trägerrohres sind Achselemente angeordnet. Sie erstrecken sich quer zur Längserstreckung des Trägerrohres und weisen an ihren freien Enden Radlager mit den entsprechenden Rädern auf.

### Radaufhängung

An den bereits beschriebenen Achselementen sind mittelbar die Radlager angeordnet, die zur Aufnahme mindestens eines Rades dienen können. Die Verbindung zwischen Trägerrohr und Rad ist derart gestaltet, dass ausgehend von dem Trägerrohr die Radaufhängungen über ein Aufnahmeelement an dem Trägerrohr angebracht sind. Von dem Aufnahmeelement weg erstreckt sich die Radaufhängung bis zu einem Adapterelement, das zur Aufnahme des Rades dient. Neben einer starren Radaufhängung kann auch eine mit bestimmten Freiheitsgraden versehene Aufhängung vorgesehen sein. Insbesondere zur verbesserten Geländegängigkeit sind Einzelradaufhängungen vorgesehen. Die Radaufhängungen bestehen in der Regel aus einem oben liegenden und einem unten liegenden Querlenker, die mit jeweils entsprechenden Dämpfungselementen versehen sind. Alternativ hierzu sind auch Schwingen zur Umsetzung einer Einzelradaufhängung bekannt.

### Stand der Technik

Aus dem Stand der Technik sind Transporter bekannt, die ebenfalls ein Verdrehelement aufweisen. Die Verdrehung wird durch mechanisch ausgebildete Anschläge beschränkt. Andere Ausbildungen weisen keine Beschränkungen bzw. Anschläge auf. Eine Dämpfung ist nicht vorgesehen. Gemäss dem Stand der Technik zeigen solche Fahrzeuge weder eine spezielle Radaufhängung noch eine Federungseigenschaft für die Radaufhängungen.

Ferner sind Geländefahrzeuge bekannt, die insbesondere in der Landwirtschaft eingesetzt werden, die ebenfalls aus einem Trägerrohr bestehen, das sich von dem vorderen Bereich des Fahrzeuges bis zum hinteren Bereich des Fahrzeuges erstreckt. Zwischen der Fahrerkabine und dem Lastaufnahmebereich ist das Trägerrohr unterbrochen und weist ein entsprechendes Drehgelenk auf. Die Drehgelenksbewegungen können beschränkt sein, da Arretierungs- und Anschlagmittel vorgesehen sind, die einen maximalen Verdrehwinkel zulassen.

Je nach Auftreten der Kräfte wird mehr oder weniger schnell die entsprechende Verdrehung ausgeführt.

Aus der WO 99/59862 (ROVER GROUP (GB); SPILLANE ANTHONY FRANCIS (GB)) 25.11.1999 ist ebenfalls ein geländegängiges Fahrzeug bekannt, das im Wesentlichen aus einem aus einem Fahrzeuggestell besteht, das wiederum ein erstes Trägerelement umfasst, das den vorderen Abschnitt des Fahrzeuggestells bildet und einem zweiten Trägerelement, das den hinteren Abschnitt des Fahrzeuggestell bildet. Jedes der Trägerelemente umfasst Achselemente, an denen jeweils mindestens ein Rad angeordnet ist. Der vordere und der hintere Abschnitt sind zueinander verdrehbar und weisen jeweils zwischen dem vorderen und hinteren Abschnitt angeordnet ein Verdrehdämpfungselement auf. Das Verdrehdämpfungselement ist als sogenanntes Kontrollelement ausgebildet, das die Verdrehmöglichkeit des vorderen und hinteren Abschnittes gegeneinander mechanisch beschränkt.

Ferner ist in der Druckschrift CH 688311 A (LINDNER TRAKTORENWERK GMBH (AT)) 22.07.1993 ein Motorfahrzeug, bei dem der vordere und hintere Teil gegeneinander um eine horizontale Achse (gebildet durch die Längserstreckung des Fahrzeuggestells) verdrehbar ist, beschrieben. Die Hinter- und die Vorderräder sind jeweils einzeln gefedert gelagert. Die Lagerung der Räder erfolgt durch eine über zwei Drehlager mit dem Rahmenteil verbundene Schwinge. Am Ende der Schwinge befindet sich eine annähernd vertikale Schwenkachse, um welche ein Radkopf mittels eines Lenkzylinders verschwenkbar ist. Aus der Druckschrift ist anzunehmen, dass die Lagerung mit einer Schwinge in der Weise bekannt ist, dass jedes Rad gelagert an einer Schwinge mit dem Rad in der Schwenkebene der Schwinge einen unveränderlichen Winkel einschliesst. Die Verdrehung ist in der Ausbildung eines Gelenkes gelöst, wobei die rotatorische Bewegung durch Anschläge beschränkt ist. Die Auslenkung erfolgt unmittelbar, sobald Vorder- und Hinterachse unterschiedlich belastet werden.

Aus der US 2785908 A (FRED GERHARDT) 19.03.1957 ist ebenfalls ein geländegängiges Fahrzeug bekannt, das im Wesentlichen aus einem Trägerrohr besteht, wobei das Trägerrohr selbst durch einen vorderen und einen hinteren Abschnitt aufweist und die beiden Abschnitte gegeneinander verdrehbar sind. Ein Blattfedersystem lehrt die Möglichkeit, dass die jeweiligen Drehbewegungen des vorderen gegenüber dem hinteren Abschnitt gegen die Federkraft ausgeführt werden.

Aus der WO 00/46057 (TORO CO (US)) 10.08.2000 ist ebenfalls ein Fahrzeug bekannt, das ein Fahrzeuggestell aufweist, dessen Rahmen zweigeteilt ist. Die beiden Teile des Fahrzeuggestells sind gegeneinander drehbeweglich verbunden und die Drehbewegung ist durch eine Gummilagerung in den entsprechenden Ausführungen der Drehbewegung gedämpft beziehungsweise beschränkt.

Aus der US 3669469 (VOLVO AB) 13.06.1972 ist ebenfalls ein Fahrzeug bekannt, das ein zweigeteiltes Fahrzeuggestell aufweist. Der vordere Abschnitt des Fahrzeuggestells ist mit demjenigen des hinteren Fahrzeuggestells drehbeweglich verbunden und über ein Kupplungsgelenk miteinander gekoppelt.

### Nachteile des Standes der Technik

Ein Nachteil des Standes der Technik besteht insbesondere darin, dass die Verdrehung ohne jegliche Verzögerung ausgeführt wird. Die Verdrehung tritt dann ein, wenn unmittelbar Kräfte auftreten, die zu dieser Torsionsbewegung führen. Auch die Rückstellung erfolgt schlagartig und nicht verzögert. Dies hat insbesondere hinsichtlich der Fahreigenschaft und der Kippstabilität entscheidende Nachteile. Für den Fahrer kommen solche Verdrehungen überraschend.

Die beschriebene Drehbewegung tritt auch unmittelbar ein, da solche aus dem Stand der Technik bekannten Transporter eine nur unzureichende Federung der Achsen beziehungsweise der Räder aufweisen. Jedes Überfahren einer Unebenheit wird anstelle einer Einfederung des Rades in Verdrehung des Trägerrohrs kompensiert.

Es kann sogar dazu führen, dass die Torsionsbewegungen noch weiter ausgeführt werden, obwohl bereits an sich eine Gegenbewegung gewollt ist. Dies führt dann unweigerlich zu einem Kippen des Fahrzeuges.

### Aufgabe der Erfindung

Aufgabe der vorliegenden Erfindung ist es, ein geländegängiges Nutzfahrzeug bereitzustellen, das zwischen der Vorder- und der Hinterachse eine Verdrehmöglichkeit aufweist und das zumindest einen Nachteil des Standes der Technik vermeidet.

### Lösung der Aufgabe

Die Lösung der Aufgabe wird durch das Kennzeichen von Anspruch 1 oder 2 erreicht.

### Vorteile der Erfindung

Die Eigenschaften des Fahrzeuges, insbesondere die Fahreigenschaft, aber auch die Geländegängigkeit wird entscheidend durch die Verdrehdämpfung verbessert. Ungewolltes Verdrehen und schlagartiges Verdrehen ist damit nicht mehr möglich. Zusätzliche Kräfte werden so auf diese Weise kompensiert.

Das Verdrehelement selbst ist vorteilhafterweise derart ausgebildet, dass zwei Dämpfungselemente vorgesehen sind, die senkrecht zur Längserstreckung des Kraftfahrzeuges angeordnet sind. Das erste Ende des jeweiligen Dämpfungselements ist an dem ersten Abschnitt des Trägerrohrs angebracht, wohingegen das weitere freie Ende des jeweiligen Dämpfungselements in dem zweiten Abschnitt des Trägerrohrs angeordnet ist.

Um eine bessere Kraftübertragung zu erreichen, ist ferner vorgesehen, dass von dem ersten Trägerrohr sich senkrecht hierzu ein Tragelement wegerstreckt. Dieses ist derart dimensioniert, dass es zumindest der Länge des Dämpfungselements entspricht. So ist es möglich, das Dämpfungselement auch senkrecht zur Längserstreckung des Trägerrohrs entsprechend anzuordnen.

Vorteilhafterweise wird die Dämpfung der Dämpfungselemente mit Hydraulik betrieben. Vorzugsweise handelt es sich um ein geschlossenes Hydrauliksystem. Dabei ist ein Hydraulikspeicher vorgesehen, der zumindest die durch die als Dämpfungselemente ausgebildeten Hydraulikzylinder verdrängte Hydraulikflüssigkeit speichert und bei Bedarf wieder abgibt.

Die maximale Verdrehung erfolgt in beide Richtungen um ca. 30°.

Eine alternative Ausführung einer Verdrehdämpfung sieht vor, dass diese auf eine andere Weise ausgebildet ist. Um die gewünschten Eigenschaften zu erzielen, nämlich zum einen eine Begrenzung der Drehbewegung und zum anderen eine verzögerte, gedämpfte Drehbewegung, kann auch ein Mittel beispielsweise in Ausbildung einer Reibscheibe vorgesehen sein. Andere Mittel mit diesen Eigenschaften sind ebenfalls denkbar.

Ferner kann eine Ausführung vorsehen sein, bei der die Verdrehdämpfung progressiv verläuft. Dies bedeutet, dass mit zunehmendem Verdrehwinkel die zur Ausführung der Verdrehung notwendige Kraft grösser wird (vorzugsweise exponentiell). Damit steigt der entsprechende Verdrehwiderstand an.

Ein wesentlicher Vorteil der Erfindung zeigt sich insbesondere im Zusammenwirken mit einer gefederten Einzelradaufhängung. Bei herkömmlichen Fahrzeugen wird die Verdrehung unmittelbar ausgelöst, wenn beispielsweise ein Rad über ein Hindernis, beispielsweise über einen Stein fährt. Die Erschütterungen wirken sich bis in das Führerhaus des Fahrzeuges aus und belasten zudem das Fahrzeug selbst. Hingegen bei einer Einzelradaufhängung sind Verdrehdämpfung und Einzelradaufhängung derart ausgebildet, dass bei einem solchen Hindernis zunächst das Rad einfedert und die Verdrehdämpfung nicht oder nur in einem geringem Mass ausgeführt wird. Auf die Fahrgastzelle wirkt dadurch kaum eine Erschütterung. Die Beschleunigungen werden somit reduziert und die Ladung geschont. Erst bei solchen Hindernissen, bei denen der Einfederweg nicht mehr ausreicht oder in seinen Grenzbereich gelangt, wird die Verdrehdämpfung aktiv. Dieses Zusammenspiel von Einzelradaufhängung und Verdrehdämpfung kann mechanisch durch entsprechende Abstimmungen gelöst sein. Ein weiterer Lösungsansatz ist, die Abstimmung elektronisch zu lösen, indem die Verdrehdämpfung bis zu einem bestimmten Einfederweg der Einzelradaufhängung blockiert und ab diesem Grenzwert erst selbsttätig aktiviert wird.

Ein weiterer wesentlicher Vorteil der Erfindung ist in der hydraulischen Kopplung von den zuvor beschriebenen Dämpfungselementen zu sehen. Diese sind hydraulisch derart geschaltet, dass bei Aktivierung eines Dämpfungselements die verdrängte Hydraulikflüssigkeit in das weitere Dämpfungselement geführt wird. Dadurch baut das weitere Dämpfungselement eine Gegenkraft auf und verhindert so ein Überschwingen des Fahrzeugs. Insbesondere bei Fahrten am Hang, bei denen die Verdrehdämpfung aktiviert wird, führt die aufgebaute Gegenkraft zur Stabilisierung des Fahrzeugs.

Weitere vorteilhafte Ausgestaltungen gehen aus der nachfolgenden Beschreibung, den Zeichnungen und den Ansprüchen hervor.

### Beschreibung der Zeichnungen

Es zeigen

Fig. 1 eine perspektivische schematische Ansicht auf das erfindungsgemässe Nutzfahrzeug mit der erfindungsgemässen Verdrehdämpfung;

Fig. 2 eine perspektivische Ansicht auf das erfindungsgemässe Verdrehdämpfungselement;

Fig. 3 eine schematische Darstellung von der Funktionsweise des Verdrehdämpfungselements bei unterschiedlichen Benutzungslagen.

### Beschreibung eines Ausführungsbeispiels

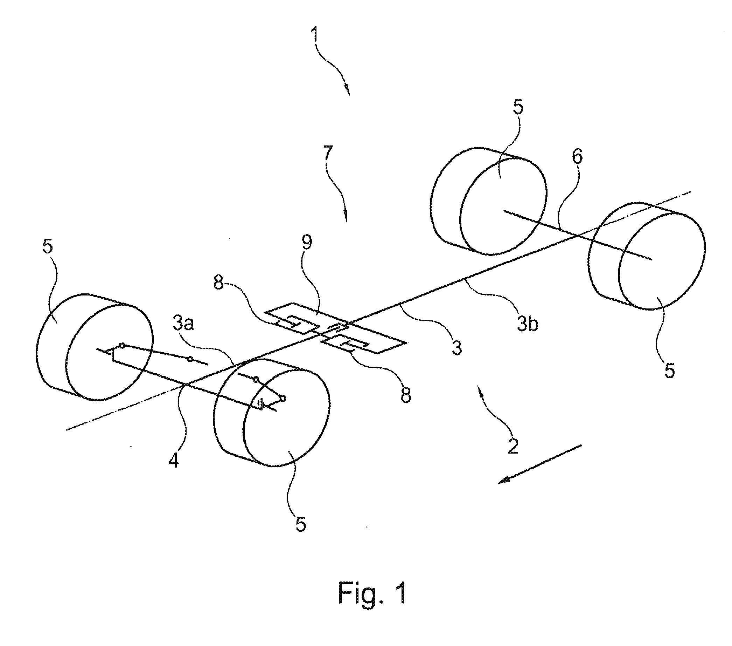

In Fig. 1 ist perspektivisch das Prinzip des erfindungsgemässen geländegängigen Fahrzeugs 1 gezeigt. Es besteht im Wesentlichen aus dem Fahrzeuggestell 2 und den entsprechenden Aufbauten, wobei die Aufbauten auf Vereinfachungsgründen nicht dargestellt sind.

Das Fahrzeuggestell 2 umfasst als wesentliches Merkmal ein Trägerrohr 3, das sich in Längserstreckung des Fahrzeuges 1 erstreckt. Das Trägerrohr 3 ist in zwei Abschnitte unterteilt, nämlich in einen vorderen Abschnitt 3a und einen hinteren Abschnitt 3b. Der vordere Abschnitt 3a des Trägerrohres 3 weist von dem dem hinteren Abschnitt 3b wegweisenden Ende ein quer angeordnetes Achselement 4 auf. Das Achselement 4 ist bei dem hier dargestellten Ausführungsbeispiel senkrecht zur Längserstreckung des Trägerrohres 3 angeordnet und weist an seinem freien Enden Räder 5 auf.

Der weitere Abschnitt 3b des Trägerrohrs 3 weist ebenfalls an seinem freien Ende ein Achselement 6 auf, wobei auch hier an den freien Enden entsprechende Räder 5 vorgesehen sind.

Als zentrales Element und als Verbindungsglied zwischen dem vorderen Abschnitt 3a des Trägerrohrs 3 und dem hinteren Abschnitt 3b des Trägerrohrs 3 ist das erfindungsgemässe Verdrehdämpfungselement 7 vorgesehen. Bei dem hier dargestellten Ausführungsbeispiel ist es derart vorgesehen, dass das Verdrehdämpfungselement 7 Dämpfungselemente 8 umfasst, die zu beiden Seiten senkrecht zum vorderen Abschnitt 3a des Trägerrohrs 3 sich wegerstrecken und mit dem hinteren Abschnitt 3b des Trägerrohrs 3 gekoppelt sind. Diese Kopplung wird dadurch erreicht, dass ein Tragelement 9 sich senkrecht von dem hinteren Abschnitt 3b des Trägerrohrs 3 wegerstreckt und mit dem freien Ende des Dämpfungselements 8 jeweils gekoppelt ist.

Es ist jedoch auch denkbar, dass die Anordnung gerade seitenverkehrt angeordnet ist, dass heisst, dass das Tragelement 9 an dem vorderen Abschnitt 3a angeordnet ist, wohingegen die Dämpfungselemente an dem hinteren Abschnitt 3b befestigt sind.

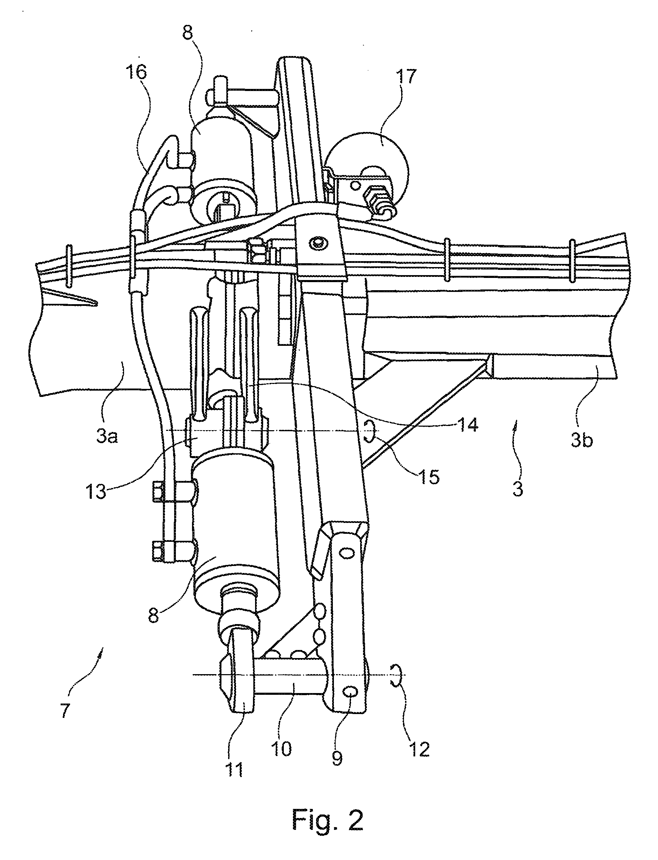

In Fig. 2 ist die konstruktive Ausführung des Prinzips gemäss Fig. 1 dargestellt.

An dem Tragelement 9 ist ein Bolzen 10 vorgesehen, der zur Aufnahme eines Auges 11 des freien Endes des Dämpfungselements 8 vorgesehen ist. Die Lagerung an dem Auge 11 folgt drehgelenkig, sodass das freie Auge 11 und damit das Dämpfungselement 8 in und gegen Pfeilrichtung 12 drehgelenkig beweglich ist. Das andere Ende des Dämpfungselements 8 weist ebenfalls ein Auge 13 auf. Entsprechende Vorrichtungen 14 sind an dem vorderen Abschnitt 3a des Trägerrohrs 3 vorgesehen, um das weitere Auge 13 aufzunehmen und dieses drehgelenkig zu lagern, sodass eine Verdrehung in und gegen Pfeilrichtung 15 möglich ist. Die beiden Dämpfungselemente 8 sind über Hydraulikleitungen 16 miteinander gekoppelt. Die Hydraulikleitungen 16 sind derart geschaltet, dass die jeweiligen Bewegungen der Dämpfungselemente 8, die aus Hydraulikzylinder ausgebildet sind, unterstützt werden. Vorzugsweise ist es ein geschlossenes System, das einen Hydraulikspeicher 17 aufweist. Die von den Dämpfungselementen 8 verdrängte Hydraulikflüssigkeit wird in den Hydraulikspeicher 17 zwischengespeichert und bei Übergang in die Nullstellung wieder entsprechend in die Dämpfungselemente 8 gedrückt. Die zuvor beschriebene Schaltung der Hydraulik für die Dämpfungselemente 8 bringt folgenden wesentlichen Vorteil, der anhand eines Beispiels erläutert wird:
Sollte der Fall eintreten, dass ein Rad des Transporters in ein tiefes Loch fährt, so wirkt die Verdrehdämpfung derart, dass zum einen eine verzögerte und vorteilhafterweise auch progressive Dämpfung ausgeführt wird. Gleichzeitig wird das weitere Dämpfungselement aktiv, indem die von dem ersten Dämpfungselement verdrängte Hydraulikflüssigkeit in das weitere Dämpfungselement geführt wird, derart dass eine Gegenkraft aufgebaut wird. Diese Gegenkraft bewirkt, dass ein Überdrehen und ein Überschwingen verhindert werden. Insbesondere am Hang wird dann das Fahrzeug stabilisiert. Dies ist eines der wichtigsten weiterbildenden Eigenschaften der dynamischen Verdrehdämpfung.

Aufgrund der Hydraulikflüssigkeit entsteht bei Verdrehung der beiden Abschnitte 3a, 3b des Trägerrohrs 3 eine Dämpfung. Dies bedeutet, dass die Bewegungen verzögert ausgeführt werden. Eine vorteilhafte Ausführung sieht vor, dass die Dämpfung progressiv erfolgt, dass heisst mit zunehmender Verdrehung wird die Dämpfung stärker, was wiederum bedeutet, dass mehr Kraft aufgewendet werden muss, um die Verdrehung weiter auszuführen.

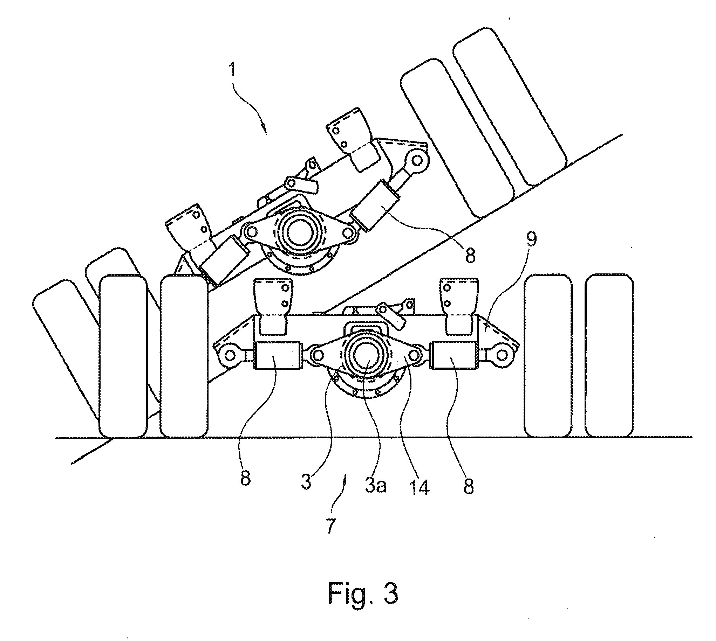

In Fig. 3 ist das Funktionsprinzip des erfindungsgemässen Verdrehdämpfungselements 7 dargestellt. Wie bereits zuvor beschrieben, sind die Dämpfungselemente 8 mit ihren einen freien Enden an dem Tragelement 9 befestigt, wohingegen die anderen freien Enden an der Vorrichtung 14, die wiederum am vorderen Abschnitt 3a des Trägerrohrs 3 angeordnet ist, fixiert.

Auf ebener Fläche, so wie die untere Bilddarstellung es zeigt, befinden sich die Dämpfungselemente 8 in Nullstellung. Sobald jedoch eine Schräglage erfolgt, in dem beispielsweise der hintere Abschnitt 3b (Fig. 1) noch in der Schräglage angeordnet ist, wohingegen der vordere Abschnitt 3a bereits auf gerader Ebene vorgesehen ist, findet eine Verdrehung der beiden Abschnitte 3a und 3b des Trägerrohrs 3 statt, so wie es im oberen Bildteil der Fig. 3 dargestellt ist. Dabei fahren die Zylinder der jeweiligen Dämpfungselemente 8 aus, wobei diese gegen den entsprechenden Hydraulikdruck arbeiten. Dadurch wird die notwendige Dämpfung des Systems erzielt. Sobald das Fahrzeug 1 wieder in eine Ebene gelangt, findet ein Ausgleich über den Hydraulikspeicher 17 (in der Zeichnung nicht dargestellt) statt, sodass das Fahrzeug 1 wieder langsam auch unter entsprechenden Dämpfungseigenschaften in die Ausgangslage zurückgeführt wird.

Durch diese sehr einfache, aber wirkungsvolle Massnahme des erfindungsgemässen Verdrehdämpfungselement 7 werden die aus dem Stand der Technik bekannten Fahreigenschaften eines geländegängigen Fahrzeugs, das insbesondere die Eigenschaft aufweist, dass der vordere Abschnitt gegenüber dem hinteren Abschnitt verdrehbar ist, weiter verbessert. Insbesondere durch die verzögerte und progressive Verdrehung, die durch das Verdrehdämpfungselement hervorgerufen werden, werden Schläge und Vibrationen nur geringfügig übertragen und dadurch neben den Komforteigenschaften auch entsprechendes Material geschont. Durch eine hydraulische Kopplung der Dämpfungselemente wird ein Überschwingen des Fahrzeugs, insbesondere bei Hang- bzw. Schrägfahrten vermieden.

### Bezugszeichenliste

- 1: geländegängiges Fahrzeug
- 2: Fahrzeuggestell
- 3: Trägerrohr
- 3a: Abschnitt
- 3b: Abschnitt
- 4: Achselement
- 5: Räder
- 6: Achselement
- 7: Verdrehdämpfungselement
- 8: Dämpfungselement
- 9: Tragelement
- 10: Bolzen
- 11: Auge
- 12: Pfeilrichtung
- 13: Auge
- 14: Vorrichtung
- 15: Pfeilrichtung
- 16: Hydraulikleitungen
- 17: Hydraulikspeicher

## Patentansprüche

1. Geländegängiges Fahrzeug, das im Wesentlichen aus einem Fahrzeuggestell (2) besteht, das wiederum im Wesentlichen
- ein erstes Trägerelement umfasst, das den vorderen Abschnitt (3a) des Fahrzeuggestells (2) bildet und
- einen zweitem Trägerelement, das den hinteren Abschnitt (3b) des Fahrzeuggestells (2) bildet, wobei jedes der Trägerelemente mindestens mittelbar zwei sich gegenüberliegende Räder (5) umfasst, und wobei das erste Trägerelement gegenüber dem zweiten Trägerelementen verdrehbar gelagert ist und hierzwischen ein Verdrehdämpfungselement (7) vorgesehen ist und
- die Trägerlemente einem Trägerrohr (3) mit einem vorderen Abschnitt (3a) und einem hinteren Abschnitt (3b) entsprechen,
**dadurch gekennzeichnet, dass**
- die Verdrehdämpfung Dämpfungselemente (8) umfasst, die hydraulisch arbeiten, derart, dass entweder eine verzögernde, dämpfende und begrenzte Drehbewegung des vorderen Abschnitts (3a) gegenüber dem hinteren Abschnitt (3b) möglich ist,
- das Tragelement (9) sich senkrecht zur Längserstreckung des vorderen Abschnittes (3a) erstreckt und
- die Dämpfungselemente (8) sich zu beiden Seiten senkrecht zum hinteren Abschnittes (3b) wegerstrecken und die freien Enden des Tragelements (9) jeweils mit den freien Enden der Dämpfungselemente (8) gekoppelt sind.

2. Geländegängiges Fahrzeug, das im Wesentlichen aus einem Fahrzeuggestell (2) besteht, das wiederum im Wesentlichen
- ein erstes Trägerelement umfasst, das den vorderen Abschnitt (3a) des Fahrzeuggestells (2) bildet und
- einen zweitem Trägerelement, das den hinteren Abschnitt (3b) des Fahrzeuggestells (2) bildet, wobei jedes der Trägerelemente mindestens mittelbar zwei sich gegenüberliegende Räder (5) umfasst, und wobei das erste Trägerelement gegenüber dem zweiten Trägerelementen verdrehbar gelagert ist und hierzwischen ein Verdrehdämpfungselement (7) vorgesehen ist und
- die Trägerlemente einem Trägerrohr (3) mit einem vorderen Abschnitt (3a) und einem hinteren Abschnitt (3b) entsprechen,
**dadurch gekennzeichnet, dass**
- die Verdrehdämpfung Dämpfungselemente (8) umfasst, die hydraulisch arbeiten, derart, dass entweder eine verzögernde, dämpfende und begrenzte Drehbewegung des vorderen Abschnitts (3a) gegenüber dem hinteren Abschnitt (3b) möglich ist,
- das Tragelement (9) sich senkrecht zur Längserstreckung des hinteren Abschnittes (3b) wegerstreckt und
- die Dämpfungselemente (8) sich zu beiden Seiten senkrecht zum vorderen Abschnitt (3a) wegerstrecken und die freien Enden des Tragelements (9) jeweils mit den freien Enden der Dämpfungselemente (8) gekoppelt sind.

3. Geländegängiges Fahrzeug nach Anspruch 1 oder 2, **dadurch gekennzeichnet, dass** das Verdrehdämpfungselement (7) zwei Dämpfungselemente (8) umfasst, wobei diese senkrecht zur Längserstreckung des Fahrzeuggestells (2) angeordnet sind und deren erstes Ende an dem ersten Trägerelement und deren zweites Ende zumindest mittelbar an dem weiteren Trägerelement angeordnet sind.

4. Geländegängiges Fahrzeug nach mindestens einem der vorhergehenden Ansprüche, **dadurch gekennzeichnet, dass** ein geschlossenes Hydrauliksystem mit einem Hydraulikspeiche (17) vorgesehen ist.

5. Geländegängiges Fahrzeug nach Anspruch 4, **dadurch gekennzeichnet, dass** Mittel vorgesehen sind, die verdrängte Hydraulikflüssigkeit des einen Dämpfungselements (8) in das weitere Dämpfungselement (8) zur Erzeugung einer Gegenkraft und zur Verhinderung eines Umkippens des Fahrzeugs geführt werden.

6. Geländegängiges Fahrzeug nach Anspruch 4, **dadurch gekennzeichnet, dass** die Dämpfungselemente (8) derart hydraulisch gestaltet sind, das die durch die Dämpfungselemente (8) verdrängte Hydraulikflüssigkeit im Hydraulikspeicher (17) zwischengespeichert und bei Übergang in die Nullstellung in die Dämpfungselemente (8) zurückgedrückt wird.

7. Geländegängiges Fahrzeug nach Anspruch 1 oder 2, **dadurch gekennzeichnet, dass** die Verdrehung des vorderen Abschnitt (3a) gegenüber dem hinteren Abschnitt (3b) des Trägerrohrs (3) ausgehend von einer Nullstellung maximal +/- 30° beträgt.

8. Geländegängiges Fahrzeug nach Anspruch 1, 2 oder 4 **dadurch gekennzeichnet, dass** die Dämpfungselemente (8) des Verdrehdämpfungselements (7) mit ihrem einen freien Ende an einem Tragelement (9) drehbeweglich angeordnet ist, wobei das Tragelement (9) fest mit dem hinteren Abschnitt (3b) des Trägerrohrs (3) verbunden ist.

9. Geländegängiges Fahrzeug nach mindestens einem der Ansprüche 1, 2, 7 oder 8, **dadurch gekennzeichnet, dass** das weitere Ende der Dämpfungselemente (8) des Verdrehdämpfungselements (7) mit einer Vorrichtung (14) verbunden ist, wobei die Vorrichtung (14) mittelbar fest mit dem vorderen Abschnitt (3a) des Trägerrohrs (3) gekoppelt ist.

10. Geländegängiges Fahrzeug nach Anspruch 1 oder 2, **dadurch gekennzeichnet, dass** das Fahrzeug (1) eine Einzelradaufhängung aufweist.

## Claims

1. All-terrain vehicle which consists substantially of a vehicle frame (2) which in turn substantially comprises
- a first carrier element which forms the front section (3a) of the vehicle frame (2), and
- a second carrier element which forms the rear section (3b) of the vehicle frame (2), each of the carrier elements comprising at least indirectly two wheels (5) which lie opposite one another, and the first carrier element being mounted such that it can be twisted with respect to the second carrier element, and a twist damping element (7) being provided between them, and
- the carrier elements corresponding to a carrier tube (3) with a front section (3a) and a rear section (3b),
**characterized in that**
- the twist damping means comprises damping elements (8) which operate hydraulically in such a way that either a retarding, damping and limited rotational movement of the front section (3a) is possible with respect to the rear section (3b),
- the carrying element (9) extends perpendicularly with respect to the longitudinal extent of the front section (3a), and
- the damping elements (8) extend away on both sides perpendicularly with respect to the rear section (3b) and the free ends of the carrying element (9) are coupled in each case to the free ends of the damping elements (8).

2. All-terrain vehicle which consists substantially of a vehicle frame (2) which in turn substantially comprises
- a first carrier element which forms the front section (3a) of the vehicle frame (2), and
- a second carrier element which forms the rear section (3b) of the vehicle frame (2), each of the carrier elements comprising at least indirectly two wheels (5) which lie opposite one another, and the first carrier element being mounted such that it can be twisted with respect to the second carrier element, and a twist damping element (7) being provided between them, and
- the carrier elements corresponding to a carrier tube (3) with a front section (3a) and a rear section (3b),
**characterized in that**
- the twist damping means comprises damping elements (8) which operate hydraulically in such a way that either a retarding, damping and limited rotational movement of the front section (3a) is possible with respect to the rear section (3b),
- the carrying element (9) extends away perpendicularly with respect to the longitudinal extent of the rear section (3b), and
- the damping elements (8) extend away on both sides perpendicularly with respect to the front section (3a) and the free ends of the carrying element (9) are coupled in each case to the free ends of the damping elements (8).

3. All-terrain vehicle according to Claim 1 or 2, **characterized in that** the twist damping element (7) comprises two damping elements (8), the latter being arranged perpendicularly with respect to the longitudinal extent of the vehicle frame (2) and their first end being arranged on the first carrier element and their second end being arranged at least indirectly on the further carrier element.

4. All-terrain vehicle according to at least one of the preceding claims, **characterized in that** a closed hydraulic system is provided with a hydraulic accumulator (17).

5. All-terrain vehicle according to Claim 4, **characterized in that** means are provided which guide displaced hydraulic fluid of one damping element (8) into the further damping element (8) in order to generate an opposing force and in order to prevent the vehicle from tipping over.

6. All-terrain vehicle according to Claim 4, **characterized in that** the damping elements (8) are designed hydraulically in such a way that the hydraulic fluid which is displaced by the damping elements (8) is buffer-stored in the hydraulic accumulator (17) and, in the case of a transfer into the zero position, is pressed back into the damping elements (8).

7. All-terrain vehicle according to Claim 1 or 2, **characterized in that**, starting from a zero position, the twisting of the front section (3a) with respect to the rear section (3b) of the carrier tube (3) is at most +/- 30°.

8. All-terrain vehicle according to Claim 1, 2 or 4, **characterized in that** the damping elements (8) of the twist damping element (7) are arranged with their one free end on a carrying element (9) in a rotationally movable manner, the carrying element (9) being connected fixedly to the rear section (3b) of the carrier tube (3).

9. All-terrain vehicle according to at least one of Claims 1, 2, 7 and 8, **characterized in that** the further end of the damping elements (8) of the twist damping element (7) is connected to a device (14), the device (14) being indirectly coupled fixedly to the front section (3a) of the carrier tube (3).

10. All-terrain vehicle according to Claim 1 or 2, **characterized in that** the vehicle (1) has an independent suspension system.

## Revendications

1. Véhicule tout-terrain, qui se compose essentiellement d'un châssis de véhicule (2), lequel à son tour, pour l'essentiel,
- comprend un premier élément de support, qui forme la partie avant (3a) du châssis de véhicule (2), et
- un deuxième élément de support, qui forme la partie arrière (3b) du châssis de véhicule (2), dans lequel chacun des éléments de support comprend deux roues (5) se faisant face au moins indirectement, et dans lequel le premier élément de support est monté de façon rotative par rapport au deuxième élément de support et il est prévu entre ceux-ci un élément d'amortissement rotatif (7), et
- les éléments de support correspondent à un tube de support (3) avec une partie avant (3a) et une partie arrière (3b),
**caractérisé en ce que**
- l'amortisseur rotatif comprend des éléments d'amortissement (8), qui opèrent de façon hydraulique, de telle manière qu'un mouvement rotatif, soit de ralentissement, d'amortissement et de limitation, de la partie avant (3a) par rapport à la partie arrière (3b) soit possible,
- l'élément portant (9) s'étend perpendiculairement à l'extension longitudinale de la partie avant (3a), et
- les éléments d'amortissement (8) s'étendent vers les deux côtés perpendiculairement à la partie arrière (3b) et les extrémités libres de l'élément portant (9) sont respectivement couplées aux extrémités libres des éléments d'amortissement (8).

2. Véhicule tout-terrain, qui se compose essentiellement d'un châssis de véhicule (2), lequel à son tour, pour l'essentiel,
- comprend un premier élément de support, qui forme la partie avant (3a) du châssis de véhicule (2), et
- un deuxième élément de support, qui forme la partie arrière (3b) du châssis de véhicule (2), dans lequel chacun des éléments de support comprend deux roues (5) se faisant face au moins indirectement, et dans lequel le premier élément de support est monté de façon rotative par rapport au deuxième élément de support et il est prévu entre ceux-ci un élément d'amortissement rotatif (7), et
- les éléments de support correspondent à un tube de support (3) avec une partie avant (3a) et une partie arrière (3b),
**caractérisé en ce que**
- l'amortisseur rotatif comprend des éléments d'amortissement (8), qui opèrent de façon hydraulique, de telle manière qu'un mouvement rotatif, soit de ralentissement, d'amortissement et de limitation, de la partie avant (3a) par rapport à la partie arrière (3b) soit possible,
- l'élément portant (9) s'étend perpendiculairement à l'extension longitudinale de la partie arrière (3b), et
- les éléments d'amortissement (8) s'étendent vers les deux côtés perpendiculairement à la partie avant (3a) et les extrémités libres de l'élément portant (9) sont respectivement couplées aux extrémités libres des éléments d'amortissement (8).

3. Véhicule tout-terrain selon la revendication 1 ou 2, **caractérisé en ce que** l'élément d'amortissement rotatif (7) comprend deux éléments d'amortissement (8), dans lequel ceux-ci sont disposés perpendiculairement à l'extension longitudinale du châssis de véhicule (2) et leur première extrémité est disposée sur un premier élément de support et leur deuxième extrémité est disposée au moins indirectement sur l'autre élément de support.

4. Véhicule tout-terrain selon au moins une des revendications précédentes, **caractérisé en ce qu'**il est prévu un système hydraulique fermé avec un réservoir hydraulique (17).

5. Véhicule tout-terrain selon la revendication 4, **caractérisé en ce qu'**il est prévu des moyens pour refouler le liquide hydraulique déplacé d'un élément d'amortissement (8) dans l'autre élément d'amortissement (8) en vue de produire une force antagoniste et d'empêcher un retournement du véhicule.

6. Véhicule tout-terrain selon la revendication 4, **caractérisé en ce que** les éléments d'amortissement (8) sont configurés hydrauliquement de telle manière que le liquide hydraulique déplacé par les éléments d'amortissement (8) soit stocké temporairement dans le réservoir hydraulique (17) et soit refoulé dans les éléments d'amortissement (8) lors du passage par la position zéro.

7. Véhicule tout-terrain selon la revendication 1 ou 2, **caractérisé en ce que** la rotation de la partie avant (3a) par rapport à la partie arrière (3b) du tube de support (3) vaut au maximum ± 30° à partir d'une position zéro.

8. Véhicule tout-terrain selon la revendication 1, 2 ou 4, **caractérisé en ce que** les éléments d'amortissement (8) de l'élément d'amortissement rotatif (7) sont disposés de façon mobile en rotation sur un élément portant (9) par une première extrémité libre, dans lequel l'élément portant (9) est solidaire de la partie arrière (3b) du tube de support (3).

9. Véhicule tout-terrain selon au moins une des revendications 1, 2, 7 ou 8, **caractérisé en ce que** l'autre extrémité des éléments d'amortissement (8) de l'élément d'amortissement rotatif (7) est reliée à un dispositif (14), dans lequel le dispositif (14) est couplé indirectement de façon solidaire à la partie avant (3a) du tube de support (3).

10. Véhicule tout-terrain salon la revendication 1 ou 2, **caractérisé en ce que** le véhicule (1) présente une suspension à roues indépendantes.
